Europäisches Patentamt

European Patent Office

Office européen des brevets

(19)

(11) **EP 0 671 712 B1**

(12) **FASCICULE DE BREVET EUROPEEN**

(45) Date de publication et mention
de la délivrance du brevet:
**28.08.2002 Bulletin 2002/35**

(51) Int Cl.7: **G07F 7/08**

(21) Numéro de dépôt: **95400505.4**

(22) Date de dépôt: **09.03.1995**

(54) **Procédé et dispositif pour authentifier un support de données destiné à permettre une transaction ou l'accès à un service ou à un lieu, et support correspondant**

Verfahren und Vorrichtung zum Authentifizieren eines Datanträgers, bestimmt zum Zulassen einer Transaktion oder des Zuganges zu einer Dienstleistung oder zu einem Ort; und entsprechender Datenträger

Method and device to authenticate a data carrier, intended to approve a transaction or the access to a service or a place; and corresponding data carrier

(84) Etats contractants désignés:
**AT BE CH DE DK ES FR GB GR IE IT LI LU NL PT SE**

(30) Priorité: **09.03.1994 FR 9402717**

(43) Date de publication de la demande:
**13.09.1995 Bulletin 1995/37**

(73) Titulaire: **BULL CP8**
**78430 Louveciennes (FR)**

(72) Inventeur: **Patarin, Jacques**
**F-78220 Viroflay (FR)**

(74) Mandataire: **Corlu, Bernard Edouard et al**
**SchlumbergerSema**
**Direction de la Propriété Intellectelle**
**36-38, rue de la Princesse - B.P. 45**
**78431 Louveciennes (FR)**

(56) Documents cités:
EP-A- 0 299 826                    WO-A-85/02927
FR-A- 2 246 913                    GB-A- 2 078 410
US-A- 4 453 074

## Description

L'invention concerne un procédé pour authentifier un support de données ou un dispositif comme émanant bien d'un organisme habilité, ce support ou dispositif étant destiné à effectuer des transactions ou à permettre l'accès à un service ou à un lieu auprès d'un distributeur affilié audit organisme, l'organisme détenant, dans un fichier, le contenu des droits actuels attachés à chaque support, procédé consistant à attribuer audit support un numéro propre (Ns) permettant de le distinguer parmi un ensemble de supports produits par ledit organisme, et à porter ce numéro sur le support.

Le but de l'invention est de proposer un procédé de ce genre qui mette en oeuvre les moyens les plus simples dans le support lui-même et dans un éventuel terminal du distributeur destiné à coopérer avec le support. Dans le cas par exemple où le support est électronique, on souhaite qu'il soit constitué seulement par une mémoire, à l'exclusion de circuits de calcul associés, et que cette mémoire ait une taille la plus faible possible. On souhaite également que ni le support, ni le terminal associé ne renferme de clé secrète, une telle clé étant susceptible d'être découverte par un fraudeur. On souhaite aussi que l'authentification permette de vérifer les droits actuels attachés au support de données, et de les mettre à jour le cas échéant.

Le document US-A 4 453 074 enseigne un procédé pour authentifier un support de données en stockant dans celui-ci une valeur d'authentification calculée à partir d'un texte de référence au moyen d'un algorithme dissymétrique. Toutefois, ce procédé ne permet pas de vérifier les droits actuels attachés au support de données, car ledit texte de référence ne mentionne pas ces droits. Par ailleurs, le document EP-A-0 299 826 enseigne un procédé pour authentifier un support de données en stockant dans celui-ci une valeur d'authentification calculée à partir notamment de droits attachés au support de données, au moyen d'un algorithme dissymétrique. Toutefois, il n'est pas prévu de mettre à jour ces droits. En outre, ce procédé nécessite des moyens de calcul situés dans le support de données.

Selon l'invention, les buts précités sont atteints au moyen des caractéristiques de la revendication 1.

L'utilisation d'un algorithme dissymétrique permet que seules les opérations d'inscription de la valeur d'authentification (VA) nécessitent l'usage d'une clé secrète, tandis que la vérification habituelle de cette valeur requiert seulement une cié publique.

Cependant, le fait de prévoir une connexion périodique avec l'organisme habilité permet de procéder à une vérification plus complète des droits attachés à chaque support et de mettre à jour si nécessaire le support.

L'invention concerne aussi les différents dispositifs associés au procédé ci-dessus.

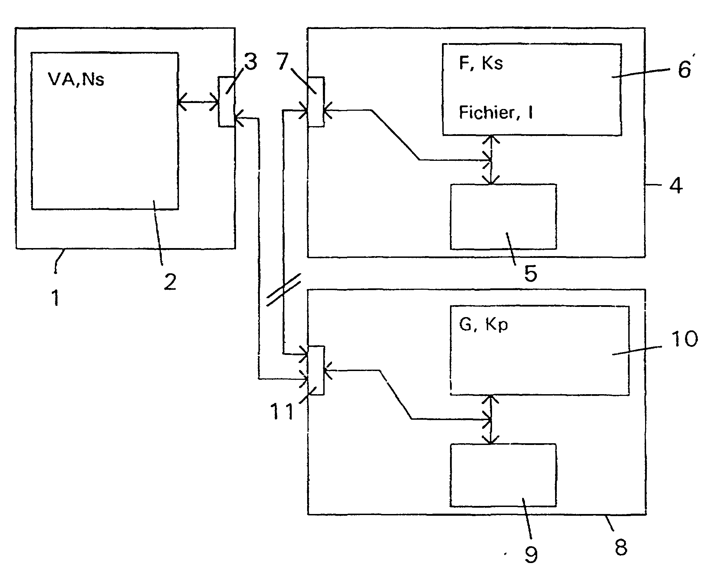

D'autres détails et avantages de l'invention apparaîtront au cours de la description suivante d'une forme de réalisation préférée mais non limitative, en regard de la figure unique annexée représentant schématiquement un objet portatif coopérant avec un terminal d'un organisme habilité et un terminal installé sur un lieu de vente.

Sur la figure, on a représenté en 1 un objet portatif, notamment une carte électronique, équipé d'une mémoire EEPROM 2 reliée à l'extérieur par une interface 3. La carte ne comporte pas de circuits de traitement du genre microprocesseur. Dans la mémoire 2, se trouve notamment deux informations, à savoir un numéro de série Ns de la carte, alloué à celle-ci lors de sa fabrication, et une valeur d'authentification VA destinée à prouver que la carte émane bien d'un organisme habilité. Le calcul de la valeur VA sera exposé ci-après.

En 4 est représenté un ordinateur central de l'organisme habilité à émettre ou mettre à jour la carte 1. Il inclut notamment des circuits de traitement 5 et une mémoire 6 communiquant entre eux et avec une interface 7. Dans la mémoire 6, est implanté le programme d'un algorithme cryptographique dissymétrique F qui, de façon connue en soi, nécessite l'usage d'une clé secrète Ks, également en mémoire, pour le chiffrement d'une donnée, tandis que son déchiffrement nécessite seulement l'usage d'une clé publique correspondante Kp. Dans la mémoire 6, se trouve encore un fichier contenant les droits actuels attachés à chacun des supports émanant de l'organisme habilité.

Il s'agit de calculer une valeur d'authentification VA pour l'introduire dans la carte 1, en utilisant deux données, à savoir le numéro de série Ns de la carte et une information I définissant les droits attachés à cette carte. L'information I est élaborée en fonction du contenu du fichier et peut par exemple prendre l'une des formes suivantes :

1. Une date de référence permettant de calculer une date limite des droits : il s'agit notamment de la date à laquelle le titulaire de la carte a souscrit un service donné pour une durée déterminée, ou directement la date limite d'accès à ce service;

2. le message suivant : "N'acceptez aucune transaction d'un montant supérieur à 100 Fr.";

3. le message : "à ce jour, les droits de Mr X sont valables";

4. un chiffre, entre 1 et 10, définissant le degré de confiance que l'organisme a dans le titulaire de la carte.

De préférence, l'information I, qui n'est pas secrète, est néanmoins exprimée sous une forme chiffrée pour préserver une certaine confidentialité.

On peut ainsi écrire :

$$VA = F (Ns, I, Ks)$$

On notera que VA peut être considéré comme une signature dissymétrique d'un message constitué par le numéro de série Ns et l'information I.

En variante, le numéro Ns pourra être constitué par tout autre numéro capable d'identifier individuellement la carte 1.

En 8 est représenté un terminal point de vente pour la distribution de biens ou de services, ou le paiement de ceux-ci. Il comporte des circuits de traitement 9 et une mémoire 10 coopérant entre eux et avec une interface 11 par des liaisons appropriées. La mémoire contient le programme d'un algorithme G associé à l'algorithme précité F et la clé publique Kp associée à la clé secrète Ks.

Selon une première forme de réalisation, on met en oeuvre une procédure du type "with message recovery" (c'est-à-dire permettant de récupérer le contenu du message). Dans ce cas, l'algorithme F est basé sur le problème de la factorisation et l'algorithme G contenu dans le terminal est constitué par l'algorithme $(F^{-1})$ inverse de l'algorithme F. Pour assurer le caractère sécuritaire du calcul de VA, la dimension de VA dans la mémoire 2 de la carte 1 devra être de préférence au moins égale à 512 bits.

Le terminal est donc apte à retrouver le couple de valeurs Ns, I de la façon suivante :

$$(Ns, I) = F^{-1} (VA, Kp)$$

En tant qu'algorithme F, on peut notamment utiliser un algorithme du type RSA (Rivest, Shamir, Adleman), par exemple sous la forme suivante

$$VA = \sqrt[3]{(Ns,I)} \ modulo \ n$$

où

- (Ns, I) représente la concaténation de Ns et ! ;

- n représente la clé publique Kp ; n = p x q, p et q étant deux nombres premiers secrets constituant la clé secrète Ks.

Dans ce cas, $F^{-1}$ s'exprime comme suit :

$$(Ns, I) = VA^3 \ modulo \ n$$

La méthode d'authentification de la carte comprend tout d'abord une phase d'initialisation chez l'organisme habilité où l'ordinateur central 4 de celui-ci calcule une première valeur VA pour une carte donnée et la rentre dans la mémoire 2 de celle-ci.

En utilisation, le terminal 8 de chaque point de vente affilié à l'organisme habilité peut procéder, de façon déconnectée par rapport à l'ordinateur central 4 de l'organisme, à un certain nombre de vérifications successives d'une même carte 1, correspondant à autant de transactions demandées. A chaque vérification, il recalcule le couple Ns, I à partir de l'algorithme $F^{-1}$ appliqué à la valeur VA qu'il lit dans la mémoire de la carte. Il peut alors vérifier d'une part que le numéro de série Ns qu'il lit dans la mémoire de la carte correspond bien à celui calculé, d'autre part que l'information I calculée est une information cohérente en soi, c'est-à-dire qu'elle constitue un message compréhensible et qu'elle est compatible avec la transaction demandée. Dans l'affirmative, le terminal point de vente peut autoriser la transaction.

En référence aux numéros des exemples d'informations I donnés précédemment, la vérification de la compatibilité pourra par exemple consister à s'assurer :

1. que la date limite des droits n'est pas dépassée, au jour de la transaction;

2. que le montant de la transaction n'est pas supérieur à 100 Fr.;

3. que les droits de Mr X n'exigent pas une nouvelle confirmation de la part de l'organisme habilité, compte tenu de l'ancienneté de la confirmation précédente;

4. que la nature de la transaction est autorisée, compte tenu du chiffre attribué.

En revanche, une différence entre Ns lu et Ns calculé ou une incohérence de l'information I calculée indiquerait que la carte ne provient pas de l'organisme habilité, de sorte que le terminal point de vente refuserait la transaction.

Une fois par mois par exemple, ou lors de grosses transactions, le terminal point de vente procède à une vérification en mode "connecté" à l'ordinateur central 4 de l'organisme habilité. Dans une première phase, il s'agit de s'assurer que la carte est bien authentique. Cela peut s'effectuer de deux manières. Soit c'est le terminal point de vente qui vérifie la valeur VA en mode "déconnecté" comme exposé précédemment. Soit c'est l'organisme habilité qui s'en charge : celui-ci possédant tous les éléments lui ayant permis d'attribuer à la carte une valeur d'authentification VA, il lui est aisé de vérifier la valeur VA lue sur la carte, par exemple soit par comparaison directe avec le contenu du fichier dans lequel il aura consigné la valeur VA authentique, le numéro de série Ns et l'information I, soit par comparaison avec une valeur VA recalculée pour la circonstance de la manière décrite plus haut.

Dans une seconde phase, dans laquelle le fonctionnement est dans tous les cas en mode "connecté", l'ordinateur central de l'organisme vérifie, en consultant le fichier, que la carte portant le numéro Ns recalculé possède encore des droits. Il vérifie par exemple :

- qu'une opposition n'a pas été déposée, suite au vol de la carte;

- que le compte bancaire auquel la carte ouvre droit, n'est pas à découvert ; etc.

Dans une troisième phase, et en tant que de besoin, l'organisme "rafraîchit" la valeur d'authentification VA pour proroger la limite de validité en fonction des droits existants de la carte, ou en fonction de nouveaux droits souscrits depuis la dernière connexion. Pour ce faire, l'ordinateur central de l'organisme calcule une nouvelle valeur VA' en fonction d'une nouvelle information I' prenant en compte cette modification des droits :

$$VA' = F (Ns, I', Ks)$$

Puis il inscrit cette valeur VA' dans la mémoire 2 de la carte, à la place de la valeur actuelle VA, ce qui clôt la procédure.

Selon une seconde forme de réalisation de l'invention, on met en oeuvre une procédure du type "without message recovery" (c'est-à-dire ne permettant pas de récupérer le contenu du message). Dans ce cas, l'algorithme F est par exemple basé sur le problème du logarithme discret et l'algorithme G contenu dans le terminal n'est pas constitué par l'algorithme $F^{-1}$ inverse de F mais est seulement corrélé à celui-ci de façon qu'il permette de vérifier que la valeur d'authentification VA a bien été calculée à partir du numéro de série Ns et de l'information I. L'algorithme G est par exemple l'algorithme connu DSS (Digital Signature Standard) qui permet, à partir de la valeur d'authentification VA, de la clé publique Kp, mais aussi du numéro de série Ns et de l'information I de vérifier la compatibilité entre VA d'une part et Ns, I d'autre part. Ici, le recalcul de Ns et I par le terminal n'est pas possible. En revanche, il suffit, pour assurer le caractère sécuritaire de VA, que la dimension de celle-ci dans la mémoire 2 de la carte 1 soit de préférence au moins égale à 320 bits.

Le calcul de compatibilité par le terminal exige, dans cette seconde forme de réalisation, que celui-ci ait connaissance du numéro de série Ns et de l'information I. En ce qui concerne le numéro de série, il sera lu par le terminal sur la carte 1. Pour ce qui est de l'information I, deux situations sont envisageables :

- soit cette information est stockée dans la mémoire 2 de !a carte, et le terminal vient la lire ;

- soit cette information est connue implicitement du terminal parce qu'elle est unique pour toute une catégorie donnée de clients ; il peut s'agir d'une information sous la forme suivante : "transactions admises jusqu'à 1000 Francs".

En utilisation, le terminal 8 de chaque point de vente peut procéder, en mode déconnecté, à des vérifications successives d'une même carte 1. A chaque fois, il vérifie la compatibilité de la valeur VA avec les valeurs Ns, I en utilisant l'algorithme G, ces trois valeurs étant lues sur la carte ou -pour ce qui est de l'information I - connue implicitement du terminal. Dans l'affirmative, il peut autoriser la transaction. Comme dans la première forme de réalisation, le terminal peut vérifier la compatibilité de l'information I avec la transaction demandée.

Le fonctionnement en mode connecté est semblable à celui décrit pour la première forme de réalisation, la seule différence étant que, si la première phase précitée dans laquelle on vérifie l'authenticité de la carte est effectuée par le terminal point de vente, les valeurs Ns et I considérées sont celles lues sur la carte et non plus celles recalculées. Si les droits attachés à la carte doivent être modifiés, l'ordinateur central de l'organisme habilité inscrit une nouvelle valeur d'authentification VA' et, le cas échéant, une nouvelle information I' à la place des données actuelles.

La présente invention s'applique non seulement à l'authentification d'une carte à mémoire, mais plus généralement de tout support de données de type électronique ou non, par exemple de type papier (pièce d'identité ou carte d'habilitation sur laquelle sont inscrits le numéro de série Ns et la valeur d'authentification VA).

Le support de données peut même être constitué par un dispositif tel qu'un ordinateur portable incorporant le numéro de série Ns et la valeur d'authentification VA.

## Revendications

1. Procédé pour authentifier un support de données ou un dispositif comme émanant bien d'un organisme habilité, ce support ou dispositif étant destiné à effectuer des transactions ou à permettre l'accès à un service ou à un lieu auprès d'un distributeur affilié audit organisme, l'organisme détenant, dans un fichier, le contenu des droits actuels attachés à chaque support, procédé comprenant les étapes consistant à:

- attribuer audit support un numéro propre (Ns) permettant de le distinguer parmi un ensemble de supports produits par ledit organisme, et à porter ce numéro sur le support ;

- initialiser ledit support ou dispositif chez l'organisme en lui attribuant une information (I) définissant, en fonction du contenu dudit fichier, les droits attachés à ce support, en calculant, à partir du numéro propre (Ns) ou de l'information (I), une valeur d'authentification (VA) au moyen d'un algorithme dissymétrique (F) et d'une clé secrète (Ks), et en portant cette valeur d'authentification sur le support ;

- procéder, lors de chaque utilisation du support, à une authentification de celui-ci par ledit distributeur dans un mode non connecté à l'organisme habilité, en effectuant un calcul par application à un algorithme (G) corrélé audit algorithme dissymétrique (F), d'une clé publique (Kp) associée à ladite clé secrète (Ks) et de la valeur d'authentification (VA) lue sur le support pour vérifier d'une part que la valeur d'authentification (VA) est compatible avec le numéro propre (Ns) ou l'information (I), et d'autre part que la transaction ou le service demandé est compatible avec l'information (I), **caractérisé en ce que** :

- à l'étape d'initialisation, on calcule la valeur d'authentification (VA) à partir du numéro propre (Ns) et de l'information (I) ;
- à l'étape d'authentification du support par ledit distributeur dans un mode non connecté à l'organisme habilité, on vérifie que la valeur d'authentification (VA) est compatible avec le numéro propre (Ns) et l'information (I) ;
- on procède périodiquement ou en fonction du type de transaction ou service, à une authentification du support à partir du distributeur dans un mode connecté à l'organisme habilité en effectuant tout d'abord une authentification du support par le distributeur ou l'organisme habilité qui vérifie que la valeur d'authentification (VA) lue sur le support est compatible avec le numéro propre (Ns) et l'information (I) et, si l'authentification est positive, en faisant confirmer par l'organisme habilité que le support possède encore des droits en fonction de l'état actuel dudit fichier puis, dans l'affirmative et si un changement de l'information (I) est nécessaire pour traduire l'état actuel des droits, en calculant, à partir du numéro propre (Ns) et d'une nouvelle information (I'), une nouvelle valeur d'authentification (VA') au moyen de l'algorithme dissymétrique (F) et de la clé secrète (Ks), et en portant cette nouvelle valeur sur le support.

2. Procédé selon la revendication 1, dans lequel l'algorithme (G) corrélé à l'algorithme dissymétrique (F) comprend un algorithme (F$^{-1}$) inverse de celui-ci et, lors de chaque utilisation du support, on procède à ladite authentification en calculant avec cet algorithme le numéro propre (Ns) et l'information (I) relatifs au support à partir de la valeur d'authentification (VA) lue sur celui-ci, puis °en vérifiant que le numéro propre (Ns) lu est identique à celui calculé et que l'information (I) calculée est cohérente en soi et compatible avec la transaction ou le service demandé.

3. Procédé selon la revendication 1, dans lequel ledit algorithme (G) corrélé à l'algorithme dissymétrique (F) est tel que ladite authentification nécessite la connaissance de l'information (I) et du numéro propre (Ns), l'information (I) étant soit portée sur le support, soit connue implicitement du distributeur, et, lors de chaque utilisation du support, on effectue ledit calcul en appliquant en outre à l'algorithme corrélé (G) le numéro propre (Ns) lu sur le support et l'information (I) lue sur le support ou connue implicitement.

4. Procédé selon l'une quelconque des revendications précédentes, dans lequel ladite information (I) inclut une date de référence permettant de calculer une date limite des droits attachés au support et, lors de chaque authentification, on vérifie si, au jour de la transaction ou du service demandé, la date limite des droits n'est pas dépassée.

5. Support de données ou dispositif comportant des moyens d'authentification pour permettre de vérifier qu'il émane bien d'un organisme habilité, ce support ou dispositif étant destiné à effectuer des transactions ou à permettre l'accès à un service ou à un lieu auprès d'un distributeur affilié audit organisme, l'organisme détenant, dans un fichier, le contenu des droits actuels attachés à chaque support, ce support portant un numéro propre (Ns) permettant de le distinguer parmi un ensemble de supports produits par ledit organisme, **caractérisé en ce qu'**il porte en outre une valeur d'authentification (VA) calculée par un algorithme dissymétrique (F) à partir d'une clé secrète (Ks), du numéro propre (Ns), et d'une information (I) définissant, en fonction du contenu dudit fichier, les droits attachés à ce support, ladite valeur d'authentification étant mise à jour par l'organisme suite à une modification desdits droits actuels attachés au support.

6. Support selon la revendication 5, dans lequel l'algorithme dissymétrique (F) est tel que l'authentification du support nécessite la connaissance de l'information (I) et du numéro propre (Ns), l'information (I) étant spécifique à chaque support et portée sur celui-ci.

7. Support selon la revendication 5 ou 6, qui comprend un objet portatif équipé d'une mémoire électronique EEPROM dans laquelle est stockée ladite valeur d'authentification (VA).

8. Terminal agencé pour coopérer chez un distributeur avec un support de données ou dispositif selon l'un quelconque des revendications 5 à 7, **caractérisé en ce qu'**il comporte des moyens pour mémoriser un algorithme (G) corrélé audit algorithme dissymétrique (F) et une clé publique (Kp) associée à la clé secrète (Ks), **en ce qu'**il est agencé pour effectuer un calcul par application à l'algorithme corrélé (G), de la clé publique (Kp) et de la valeur d'authentification (VA) lue sur le support pour vérifier d'une part que la valeur d'authentification (VA) est compatible avec le numéro propre (Ns) et l'information (I), et d'autre part que la transaction ou le service demandé est compatible avec l'information (I), et **en ce qu'**il est agencé pour procéder à une vérification en mode connecté à l'organisme habilité pour que ce dernier mette à jour la valeur d'authentification suite à une modification desdits droits actuels attachés au support.

9. Dispositif central pour coopérer chez un organisme habilité avec un support de données ou dispositif selon l'une quelconque des revendications 5 à 7 **caractérisé en ce qu'**il comporte des moyens pour mémoriser ledit fichier, ledit algorithme dissymétrique (F) et ladite clé secrète (Ks), **en ce qu'**il est agencé pour confirmer que le support possède encore des droits en fonction de l'état actuel dudit fichier, et, dans l'affirmative et si un changement de l'information (I) est nécessaire pour traduire l'état actuel des droits, pour calculer, à partir du numéro propre (Ns) et d'une nouvelle information (I), une nouvelle valeur d'authentification (VA') au moyen de l'algorithme dissymétrique (F) et de la clé secrète (Ks), et pour porter cette nouvelle valeur sur le support.

**Claims**

1. Method to authenticate a data support or device as being issued by an authorised organisation, this support or device being intended to make transactions or to provide access to a service or to a location with a distributor affiliated to the said organisation, the organisation holding, in a file, the content of the present rights attached to each support, method including the following steps:

    - allocate a specific number (Ns) to the said support in order to identify it amongst a set of supports produced by the said organisation, and write this number on the support;
    - initialise the said support or device on the premises of the organisation by allocating it an item of information (I) defining, according to the content of the said file, the rights attached to this support, by calculating from the specific number (Ns) or the information (I), an authentication value (VA) using a dissymmetric algorithm (F) and a secret key (Ks), and by writing this authentication value on the support;
    - carry out, each time it is used, an authentication of the support by the distributor, off-line from the authorised organisation, by performing a calculation by applying to an algorithm (G) correlated to the said dissymmetric algorithm (F), a public key (Kp) associated with the said secret key (Ks) and the authentication value (VA) read on the support to check firstly that the authentication value (VA) is compatible with the specific number (Ns) or the information (I) and secondly that the transaction or service requested is compatible with the information (I) **characterised in that**:

    - during the initialisation step, the authentication value (VA) is calculated from the specific number (Ns) and the information (I);
    - during the step of authentication of the support by the said distributor off-line from the authorised organisation, check that the authentication value (VA) is compatible with the specific number (Ns) and the information (I);
    - periodically, or depending on the type of transaction or service, the support is authenticated by the distributor on-line to the authorised organisation, the support being first authenticated by the distributor or the authorised organisation which checks that the authentication value (VA) read on the support is compatible with the specific number (Ns) and the information (I) and, if authentication is positive, by obtaining confirmation from the authorised organisation that the support still has rights depending on the present state of the said file, then, if positive and if the information (I) must be changed to reflect the present state of the rights, by calculating, from the specific number (Ns) and a new item of information (I'), a new authentication value (VA') using the dissymmetric algorithm (F) and the secret key (Ks), and by writing this new value on the support.

2. Method according to claim 1, in which the algorithm (G) correlated to the dissymmetric algorithm (F) includes an inverse algorithm ($F^{-1}$) of algorithm F and, each time the support is used, the said authentication is carried out by calculating with this algorithm the specific number (Ns) and the information (I) concerning the support using the authentication value (VA) read on it, then, by checking that the specific number (Ns) read is identical to that calculated and that the information (I) calculated is coherent and compatible with the transaction or service requested.

**3.** Method according to claim 1, in which the said algorithm (G) correlated to the dissymmetric algorithm (F) is such that the said authentication involves knowing the information (I) and the specific number (Ns), the information (I) either being written on the support or known implicitly by the distributor and, each time the support is used, the said calculation is carried out by applying in addition to the correlated algorithm (G) the specific number (Ns) read on the support and the information (I) read on the support or known implicitly.

**4.** Method according to any of the previous claims, in which the said information (I) includes a reference date used to calculate an expiry date of the rights attached to the support and, during each authentication, a check is carried out to test that on the day of the transaction or service requested, the rights have not expired.

**5.** Data support or device including authentication means to check that it was issued by an authorised organisation, this support or device being intended to make transactions or to provide access to a service or to a location with a distributor affiliated to the said organisation, the organisation holding, in a file, the content of the present rights attached to each support, this support bearing a specific number (Ns) in order to identify it amongst a set of supports produced by the said organisation, **characterised in that** it bears in addition an authentication value (VA) calculated by a dissymmetric algorithm (F) using a secret key (Ks), the specific number (Ns) and an item of information (I) defining, according to the content of the said file, the rights attached to this support, the said authentication value being updated by the organisation further to a modification of the said present rights attached to the support.

**6.** Support according to claim 5, in which the dissymmetric algorithm (F) is such that authentication of the support involves knowing the information (I) and the specific number (Ns), the information (I) being specific to each support and written on it.

**7.** Support according to claim 5 or 6, which includes a portable object equipped with an EEPROM electronic memory storing the said authentication value (VA).

**8.** Terminal adapted to co-operate on a distributor's premises with a data support or device according to any of claims 5 to 7, **characterised in that** it includes means to store an algorithm (G) correlated to the said dissymmetric algorithm (F) and a public key (Kp) associated with the secret key (Ks), **in that** it is adapted to perform a calculation by applying to the correlated algorithm (G) the public key (Kp) and the authentication value (VA) read on the support to check firstly that the authentication value (VA) is compatible with the specific number (Ns) and the information (I) and secondly that the transaction or service requested is compatible with the information (I), and **in that** it is adapted to carry out a check on-line to the authorised organisation so that the latter updates the authentication value further to a modification of the said present rights attached to the support.

**9.** Central device to co-operate on the premises of an authorised organisation with a data support or device according to any of claims 5 to 7, **characterised in that** it includes means to store the said file, the said dissymmetric algorithm (F) and the said secret key (Ks), and **in that** it is adapted to confirm that the support still has rights depending on the present state of the said file and, if positive and if the information (I) must be changed to reflect the present state of the rights, to calculate, from the specific number (Ns) and a new item of information (I'), a new authentication value (VA') using the dissymmetric algorithm (F) and the secret key (Ks), and to write this new value on the support.

**Patentansprüche**

**1.** Verfahren zur Authentifizierung eines Datenträgers oder einer Vorrichtung als von einem bevollmächtigten Organismus stammend, indem dieser Datenträger oder diese Vorrichtung Transaktionen durchführen oder den Zugriff auf einen Service oder Ort bei einer dem besagten Organismus angehörenden Ausgebeinstanz erlauben soll und der Organismus in einer Datei über den Inhalt der jedem bei einem bevollmächtigten Organismus Datenträger zugewiesenen aktuellen Rechte verfügt, wobei sich das Verfahren aus Stufen zusammensetzt, welche darin bestehen, dass:

- besagtem Datenträger eine Eigennummer (Ns) zugewiesen wird, dank welcher er aus einer Menge von besagtem Organismus erzeugten Trägern unterscheidbar ist und im Aufbringen dieser Nummer auf dem Träger;
- besagter Träger oder besagte Vorrichtung beim Organismus initialisiert wird, indem ihm (ihr) eine Information (I) zugewiesen wird, welche die an diesen Träger gebundenen Rechte als Funktion des Inhalts besagter Datei definiert, indem mittels der Eigennummer (Ns) oder der Information (I) ein Authentifizierungswert (VA) über einen asymmetrischen Algorithmus (F) und einen Geheimschlüssel (Ks) errechnet wird und indem dieser Authentifizierungswert auf dem Träger aufgebracht wird;

- der Träger bei jeder Verwendung durch besagte Ausgabeinstanz ohne aktive Verbindung zum bevollmächtigten Organismus authentifiziert wird, indem durch Anwendung eines mit besagtem asymmetrischen Algorithmus (F) korrelierten Algorithmus (G), eines besagtem Geheimschlüssels (Ks) zugewiesenen öffentlichen Schlüssels (Kp) und des am Träger gelesenen Authentifizierungswerts (VA) eine Berechnung ausgeführt wird, um einerseits zu überprüfen, ob der Authentifizierungswert (VA) mit der Eigennummer (Ns) oder Information (I) übereinstimmt und andererseits, ob die Transaktion oder der angeforderte Service mit der Information (I) übereinstimmt, **gekennzeichnet dadurch, dass**:

- in der Initialisierungsstufe der Authentifizierungswert (VA) mittels der Eigennummer (Ns) und der Information (I) errechnet wird;
- in der Authentifizierungsstufe des Trägers durch besagte Ausgabeinstanz ohne aktive Verbindung zum bevollmächtigten Organismus überprüft wird, ob der Authentifizierungswert (VA) mit der Eigennummer (Ns) und der Information (I) übereinstimmt;
- periodisch oder als Funktion des Transaktions- oder Servicetyps eine Authentifizierung des Trägers ab der Ausgabeinstanz mit aktiver Verbindung zum bevollmächtigten Organismus erfolgt, indem zunächst eine Authentifizierung des Trägers durch die Ausgabeinstanz stattfindet oder durch den bevollmächtigten Organismus, welcher überprüft, ob der am Träger gelesene Authentifizierungswert (VA) mit der Eigennummer (Ns) und der Information (I) übereinstimmt und bei positiver Authentifizierung, indem der bevollmächtigte Organismus bestätigt, dass gemäss dem aktuellen Zustand besagter Datei der Träger immer noch über Rechte verfügt, dann, falls zutreffend, und wenn die Information (I) geändert werden muss, um den aktuellen Zustand der Rechte auszudrücken, indem ab der Eigennummer (Ns) und einer neuen Information (I') ein neuer Authentiflzierungswert (VA') mittels dem asymmetrischen Algorithmus (F) und dem Geheimschlüssel (Ks) errechnet wird und durch Aufbringen dieses neuen Werts auf den Träger.

2. Verfahren gemäss Patentanspruch 1, bei welchem der Algorithmus (G), welcher mit dem asymmetrischen Algorithmus (F) korreliert ist, einen von Letzterem inversen Algorithmus (F$^{-1}$) hat und man bei jeder Verwendung des Trägers besagte Authenttfizierung vornimmt, indem die mit diesem Algorithmus die sich auf den Träger beziehende Eigennummer (Ns) und Information (I) anhand des auf diesem Träger gelesenen Authentifizierungswert (VA) errechnet und anschließend überprüft wird, ob die gelesene Eigennummer (Ns) mit der errechneten Nummer identisch und ob die errechnete Information (I) an sich konsistent ist und mit der Transaktion oder dem angeforderten Service übereinstimmt.

3. Verfahren gemäss Patentanspruch 1, bei welchem besagter mit dem asymmetrischen Algorithmus (F) korrelierte Algorithmus (G) so ist, dass besagte Authentifizierung die Kenntnis der Information (I) und der Eigennummer (Ns) bedingt, wobei die Information (I) entweder auf dem Träger aufgebracht ist oder die Ausgabeinstanz implizit von ihr weiß und dass man bei jeder Verwendung des Trägers besagte Berechnung durchgeführt wird, indem auf den korrelierten Algorithmus (G) zusätzlich die am Träger gelesene Eigennummer (Ns) und die am Träger gelesene oder implizit bekannte Information (I) angewandt wird.

4. Verfahren gemäss einem beliebigen vorausgehenden Patentanspruch, bei welchem besagte Information (I) einen Bezugstermin zur Berechnung eines Endtermins der an den Träger gebundenen Rechte hat und man bei jeder Authentifizierung den Endtermin der Rechte am Tag der Transaktion oder des angeforderten Services auf Überschreitung überprüft.

5. Datenträger oder Vorrichtung mit Authentifizierungsmitteln, dank welcher überprüft werden kann, ob der Träger oder die Vorrichtung von einem bevollmächtigten Organismus stammt, wobei dieser Träger oder diese Vorrichtung zur Durchführung von Transaktionen bestimmt ist oder den Zugriff auf einen Service oder einen Ort bei einem besagten Organismus angehörender Ausgabeinstanz ermöglicht und der Organismus in einer Datei den Inhalt der an jeden Träger gebundenen Rechte besitzt, indem dieser Träger eine Eigennummer (Ns) trägt, dank welcher er aus einer Menge von vom besagten Organismus erzeugten Trägern unterscheidbar ist, **gekennzeichnet dadurch, dass** er ferner einen Authentifizierungswert (VA) trägt, welcher über einen asymmetrischen Algorithmus (F) auf der Basis eines Geheimschlüssels (Ks), der Eigennummer (Ns) und einer Information (I) - welche die an diesen Träger gebundenen Rechte als Funktion des Inhalts besagter Datei definiert - errechnet wird, wobei besagter Authentifizierungswert durch den Organismus im Anschluss an eine Änderung besagter aktueller Rechte, die an diesen Träger gebunden sind, aktualisiert wird.

6. Träger gemäss Patentanspruch 5, bei welchem der asymmetrische Algorithmus (F) so ist, dass die Authentifizierung des Trägers bedingt, dass man die Information (I) und die Eigennummer (Ns) kennt, wobei die Information (I) spezifisch jedem Träger angehört und auf ihm aufgebracht ist.

7. Träger gemäss Patentanspruch 5 oder 6, welcher ein mit einem elektronischen EEPROM-Speicher - in welchem besagter Authentifizierungswert (VA) gespeichert ist - versehenes tragbares Objekt einschließt.

8. Zur Kooperation bei einer Ausgabeinstanz mit einem Datenträger oder einer Vorrichtung gemäss einem beliebigen Patentanspruch 5 bis 7 konstruiertes Terminal, **gekennzeichnet dadurch, dass** es Mittel zur Speicherung eines mit besagtem asymmetrischen Algorithmus (F) korrelierten Algorithmus (G) und einen dem Geheimschlüssel (Ks) zugeordneten öffentlichen Schlüssel (Kp) aufweist und dadurch, dass es so konstruiert ist, dass es eine Berechnung ausführt, indem es auf den korrelierten Algorithmus (G) den öffentlichen Schlüssel (Kp) und den am Träger gelesenen Authentifizierungswert (VA) anwendet, um einerseits zu überprüfen, ob der Authentifizierungswert (VA) mit der Eigennummer (Ns) und der Information (I) übereinstimmt und andererseits, ob die Transaktion oder der angeforderte Service mit der Information (I) übereinstimmt sowie dadurch, dass es so konstruiert ist, dass es eine Überprüfung mit aktiver Verbindung zum bevollmächtigten Organismus vornehmen kann, damit Letzterer den Authentifizierungswert im Anschluss an eine Änderung der besagten aktuellen Rechte, die an den Träger gebunden sind, aktualisiert.

9. Zentrale Vorrichtung zur Kooperation mit einem Datenträger oder einer Vorrichtung bei einem bevollmächtigten Organismus gemäss einem beliebigen Patentanspruch 5 bis 7, **gekennzeichnet dadurch dass** sie Mittel zur Speicherung besagter Datei, besagten asymmetrischen Algorithmus (F) und besagten Geheimschlüssels (Ks) aufweist, dass sie in einer Weise konstruiert ist, um bestätigen zu können, dass der Träger gemäss dem aktuellen Zustand besagter Datei immer noch über seine Rechte verfügt, und falls zutreffend und eine Änderung der Information (I) erforderlich ist, um den aktuellen Zustand der Rechte auszudrücken, damit ein neuer Authentifizierungswert (VA') anhand der Eigennummer (Ns) und einer neuen Information (I') über den asymmetrischen Algorithmus (F) und den Geheimschlüssel (Ks) errechnet werden und dieser neue Wert am Träger aufgebracht werden kann.